# FASCICULE DE BREVET EUROPEEN

(11) **EP 0 642 640 B1**
(45) Date de publication et mention de la délivrance du brevet: **18.09.1996**
(21) Numéro de dépôt: 94911219.7
(22) Date de dépôt: 25.03.1994
(51) Int. Cl.: F16L 37/096

(54) **DISPOSITIF DE RACCORDEMENT RAPIDE DE TUYAUTERIE POUR FLUIDE SOUS PRESSION**
VORRICHTUNG ZUM SCHNELLVERBINDEN VON UNTER DRUCK STEHENDEN ROHREN
DEVICE FOR HIGH SPEED COUPLING OF PRESSURIZED FLUID PIPES

(30) Priorité: 26.03.1993 FR 9303861
(43) Date de publication de la demande: 15.03.1995
(73) Titulaire: MATZUZZI, Jean-Antoine, F-20000 Ajaccio (FR); FANCELLO, Michele, I-09100 Cagliari (IT)
(72) Inventeur: MATZUZZI, Jean-Antoine, F-20000 Ajaccio (FR); FANCELLO, Michele, I-09100 Cagliari (IT)
(74) Mandataire: Somnier, Jean-Louis
(86) Numéro de dépôt international: FR9400332
(87) Numéro de publication internationale: WO9423236

(56) Documents cités:
- DE-U- 9 002 574
- FR-A- 1 364 735
- FR-A- 1 562 518
- FR-A- 1 579 595
- FR-A- 2 346 628
- US-A- 4 215 883

## Description

La présente invention a pour objet un dispositif de raccordement rapide de tuyauterie pour fluide sous pression.

Le secteur technique de l'invention est le domaine de la fabrication de raccords de tuyaux.

Une des applications principales de l'invention est de pouvoir raccorder rapidement des tuyauteries en matière plastique souple ou semi rigide, comme celles utilisées dans l'irrigation et l'arrosage de grandes surfaces de terrains agricoles.

En effet, on connaît :
- d'une part différents types de raccords dits rapides mais, soit qui sont montés à demeure à l'extrémité des tuyaux à raccorder, soit qui sont assez complexes mécaniquement, soit qui ne résistent pas aux intempéries et/ou qui sont utilisables que sur des tubes de petit diamètre : tels que pour des tubes souples le brevet EP 118.656 publié le 19 Septembre 1984, déposé par la société allemande FIRMA FRANCE VIEGENER et intitulé "dispositif d'accouplement pour la jonction étanche sous pression et démontable de tuyaux en matière déformable", ou pour des tuyaux rigides le brevet EP 66.601 publié le 15 Décembre 1982, déposé par la société suédoise NOLEK SYSTEM et intitulé "dispositif d'accouplement rapide", et le brevet EP 226.553 publié le 24 Juin 1987, déposé par la société italienne VULCANO DI POZZI et intitulé "raccords du type rapide à verrouillage automatique";
- d'autre part, des raccords pour tuyauteries dits raccords à compression comme ceux existant dans la même application principale que l'invention, et qui comportent un écrou se vissant sur une partie mâle et serrant, par une partie conique, une pièce déformable sur le tuyau à raccorder : ces raccords nécessitent des outils à clé ou à griffes pour serrer ledit écrou sur une pièce femelle pour les monter, et inversement pour les démonter, ce qui est long et rend leur utilisation difficile sur des sites extérieurs; de plus, le serrage marque le tuyau à chaque utilisation, et après plusieurs démontages et remontages, il faut couper leur extrémité.

Tous ces raccords existants sont également assez chers et ne permettent pas, par leur conception technique telle que rappelée ci-dessus, de satisfaire les besoins des utilisateurs, même si d'autres types de réalisations ont essayé de satisfaire cette demande, mais sans pouvoir y parvenir tel qu'en particulier celle décrite dans la demande FR 2.298.718 publiée le 20 Août 1976 et déposée par la société PLASSON avec une "attache de serrage à ressort", et qui constitue du reste l'art antérieur le plus proche de la présente invention, qui peut en être considéré alors comme un perfectionnement. Cependant, un tel dispositif de serrage à ressort avec un seul crochet fixé à demeure à l'extrémité de la tuyauterie à connecter nécessite de basculer celui-ci à la main pour la connexion du fait de sa forme, un guidage par emboîtement assez long pour éviter les vibrations, n'est pas assez résistant et ne permet pas une adaptation à toutes les extrémités, ni de réparation sur celle-ci; du reste, aucun raccord utilisant le dispositif suivant cette invention n'a pu véritablement être développé et prendre une place importante sur le marché.

En effet, le problème posé est de pouvoir raccorder rapidement des tuyauteries, en particulier en matière plastique, puis de les déconnecter également rapidement pour pouvoir les déplacer ou changer le branchement, afin de couvrir complètement par exemple une surface à arroser sans perte de temps; le système de raccordement doit s'adapter à toute extrémité non préparée, résister également aux intempéries, être facile d'utilisation, aussi bien au montage et au montage qu'à la connexion et déconnexion, sans outil spécial, sans nécessiter plusieurs personnes ni une adresse particulière de l'opérateur, être réutilisable aussi souvent que souhaité et réparable si l'extrémité se déforme, résister aux pressions internes de fluide et être étanche à celui-ci.

Une solution au problème posé est un dispositif de raccordement rapide de tuyauterie pour fluide sous pression comprenant une partie femelle dans laquelle se loge l'extrémité de la tuyauterie à raccorder, et portant un joint d'étanchéité, et comportant à son extrémité une couronne périphérique continue, dont la forme coopère avec celle de crochet porté par la tuyauterie et qui peut venir se verrouiller dessus, en basculant autour d'un axe, par tout système de rappel à ressort associé, comportant deux crochets, montés diamétralement opposés près de l'extrémité de la tuyauterie à raccorder, sur un collier comportant au moins une bride de serrage autour de la tuyauterie par toute fixation réglable et des crampons intérieurs qui s'ancrent dans la surface externe de la tuyauterie, lesquels crochets et ladite couronne périphérique étant entièrement en matière plastique homogène.

Dans un mode de réalisation préférentiel, chaque crochet dispose d'une forme avant arrondie, dont la partie située vers la surface extérieure de la tuyauterie, est au moins inclinée à partir du point de contact avec l'extrémité de la couronne quand elle vient s'appuyer contre lesdits crochets, afin de pouvoir les soulever et d'une partie recourbée qui s'appuie derrière ladite couronne une fois les crochets basculés, par le système de rappel à ressort.

Le résultat est de nouveaux dispositifs de raccordement rapide de tuyauterie pour fluide sous pression qui, d'une part, satisfont aux inconvénients des dispositifs actuels, et d'autre part, répondent au problème posé, en particulier pour l'application principale qui est le domaine de l'irrigation et de l'arrosage de grandes surfaces agricoles.

En effet, dans ce domaine en particulier, il est connu d'utiliser des tuyaux de transport d'eau en polyéthylène souple, résistant à 16 bars pour 20° de température de fonctionnement, 10 bars pour 60° et 6 bars à 100°; les raccords correspondants doivent résister aux mêmes conditions d'utilisation, ce qui est le cas des raccords de la présente invention, avec des crochets réalisés en résine acétale, et la pièce femelle et le collier, en polyoléfine chargé de fibres minérales, de type polypropylène chargé de fibres de verre.

De même suivant le choix de matériau dans lequel sont réalisés les éléments du dispositif de l'invention, tel qu'indiqué ci-dessus, ces éléments peuvent être tous de couleur entièrement noire, ce qui permet de réfléchir les rayonnements solaires, préservant la qualité des matériaux en empêchant leur détérioration et leur montée en température; ceci serait le cas s'ils comportaient des pièces métalliques ou plastiques mais de qualités différentes comme beaucoup de raccords à ce jour, et/ou serait de couleur claire; ces particularités de couleurs de matériau permettent d'assurer une plus longue durée de vie et un meilleur accrochage et tenue à la pression sur les tuyaux souples.

Ainsi, les raccords suivant l'invention ont une durée de vie de 50 ans estimée et ne subissent aucune vibration surtout avec leur double système d'accrochage,

De plus grâce à ces doubles crochets situés diamétralement opposés, et ayant une forme avant arrondie tel que décrit ci-dessus, il est possible de pouvoir connecter directement deux tuyaux l'un par rapport à l'autre, par simple rapprochement des deux extrémités, jusqu'à leur clampage automatique, sans avoir à manoeuvrer directement lesdits crochets, comme c'est pourtant le cas même dans le dispositif du brevet FR. 2.298.718 qui, bien que ressemblant dans le principe, ne permet pas du fait de la mauvaise disposition de ses formes, un accrochage automatique. Par contre celles des différents éléments tels que décrits dans la présente invention permet par contre un tel raccordement rapide. sans assistance manuelle sur les crochets lors du verrouillage, et donc une mise en oeuvre efficace et rapide.

Par ailleurs, la présence des deux crochets diamétralement opposés permet une meilleure répartition à la traction dans l'axe de la tuyauterie, sans risque de coincement des deux extrémités encastrées l'une dans l'autre, ce qui facilite leur démontage et évite comme indiqué précédemment les vibrations.

La disposition également des deux crochets permet de pouvoir démonter rapidement la connexion en dégageant ceux-ci de l'extrémité de la pièce sur laquelle on a raccordé ledit tuyau par simple pression, et en tirant sur celui-ci pour le dégager.

Cette facilité et rapidité de démontage permet de pouvoir déplacer et changer la configuration du réseau d'irrigation par exemple; le système d'accrochage par crochets est donc réutilisable à tout moment, sans abîmer l'extrémité du tuyau comme dans les raccords à compression, puisque le collier de retenue qui fixe ces crochets sur l'extrémité du tuyau à raccorder, est à demeure et n'a plus besoin d'être modifiée et échangée pour chaque connexion, le collier de fixation des crochets permet cependant de fixer ceux-ci sur toute extrémité du tuyau non préparée pour cela à l'avance, et donc même de réparer ultérieurement en coupant l'extrémité et en déplaçant ce collier d'une certaine distance par rapport à l'extrémité coupée.

La suppression de la plupart des pièces métalliques qui existent souvent dans les raccords actuels évite, outre l'absorption du rayonnement et donc la montée en température, les risques d'oxydation et de blocage des pièces métalliques, puisque même le dispositif de ressort est réalisé dans le même matériau que les crochets eux-mêmes; ceci est possible grâce au choix particulier des matériaux tel qu'indiqué précédemment tout en préservent la tenue à la traction.

On pourrait citer d'autres avantages de la présente invention, mais ceux cités ci-dessus en montrent déjà suffisamment pour en démontrer la nouveauté et l'intérêt.

La description et les figures ci-après représentent un exemple de réalisation de l'invention, mais n'ont aucun caractère limitatif : d'autres réalisations sont possibles dans le cadre de la portée et de l'étendue de la présente invention.

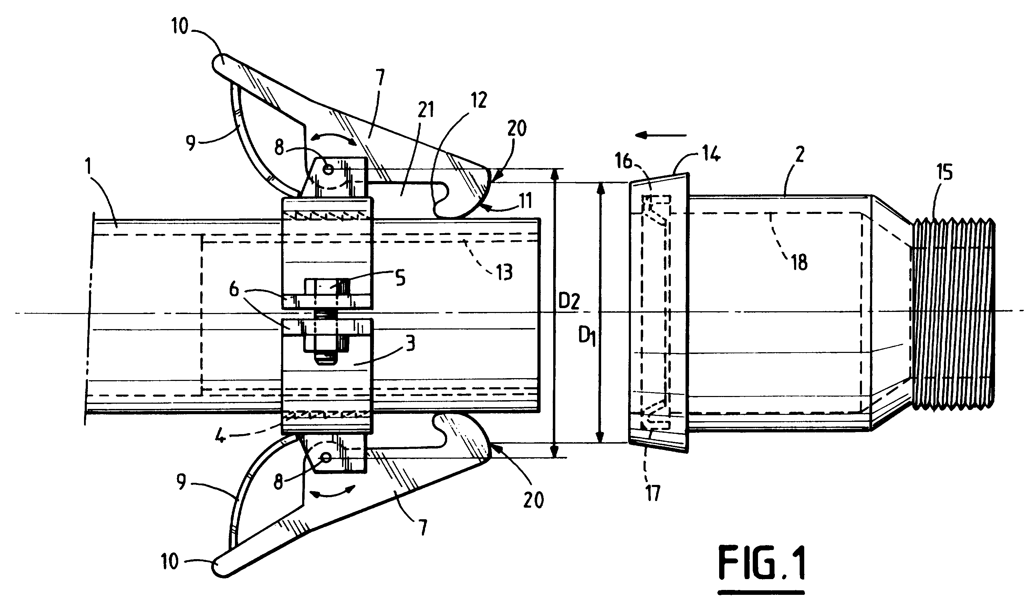

La figure 1 est une vue de profil d'un dispositif suivant l'invention monté aux deux extrémités de tuyaux à raccorder avant le raccordement.

La figure 2 est une vue latérale des mêmes éléments de dispositif que dans la figure 1, mais pendant le raccordement ou la déconnexion.

La figure 3 est une vue en coupe d'un dispositif suivant l'invention en position raccordée.

En effet, le dispositif de raccordement suivant l'invention comprend, d'une manière connue, d'un côté une partie femelle 2 comprenant une partie interne 18, dont le diamètre intérieur est égal ou légèrement supérieur au diamètre extérieur de la tuyauterie 1 que l'on veut raccorder, et dont l'extrémité doit se loger dans cette partie femelle 2; celle-ci porte également un joint d'étanchéité 16 autour de ladite tuyauterie 1 ainsi que, dans la plupart des cas un filetage 15 sur lequel peut être vissée toute pièce à raccorder 19, tel qu'une vanne ou toute autre pièce permettant de raccorder la tuyauterie 1 à un autre type de tuyauterie non représentée sur les figures.

La pièce femelle 2 peut également faire partie d'un raccord intégré permettant une dérivation ou tout autre dispositif comportant les éléments tels que décrits ci-dessous et nécessaires au dispositif suivant l'invention. En particulier, ladite pièce femelle doit donc comporter une couronne périphérique 14 continue à son extrémité, et dont la forme coopère avec celle des crochets 7 solidaires de l'extrémité de la tuyauterie 1 à raccorder et qui viennent se verrouiller dessus.

De préférence, le joint 16 d'étanchéité est un joint à lèvres situé dans une gorge 17 creusée dans l'épaisseur de ladite couronne 14.

Les deux dits crochets 7 sont basculant autour d'un axe 8 et sont fixés diamétralement sur et près de ladite extrémité 1 à raccorder et associés à tout système 9 de rappel à ressort les maintenant basculés vers ladite extrémité, de telle façon que leur partie avant 11 vienne en contact contre la surface extérieure du tuyau à raccorder 1.

Ces crochets 7 sont montés de préférence sur un collier 3 comportant au moins une bride de serrage 6 autour de la tuyauterie 1 et des crampons intérieurs 4 qui s'ancrent dans la surface externe de cette tuyauterie 1. La bride de serrage 6 permet d'ouvrir le collier pour l'enfiler autour de l'extrémité de la tuyauterie 1 et à la distance voulue du bord 20 de celle-ci, de telle façon que la distance entre ce collier et ce bord 20 corresponde au maximum à la longueur de la partie intérieure 18 de la partie femelle 2, et au minimum pour assurer le recouvrement à l'intérieur de cette partie du joint d'étanchéité 7 tout en assurant un emboîtement suffisant pour assurer une résistance à la flexion du système une fois emboîté.

Une fois le collier 3 à la position voulue et souhaitée, on agit sur la fixation 5 réglable qui peut être en particulier un boulon ou toute pièce permettant de rapprocher les deux parties de la bride 6 pour assurer son serrage autour de la tuyauterie 1 et l'ancrage des crampons intérieurs 4 qui assureront la tenue à la traction due à la pression interne dans la tuyauterie : une fois mi en place, ce collier n'a plus à être déplacé et restera dans cette position lors de toute manoeuvre de connexion et déconnexion du dispositif.

Le système 9 du rappel à ressort associé à chacun des crochets 7 est constitué d'une languette 9 intégrée et coulée dans le même bloc du même matériau que le crochet correspondant 7 : cette languette fait ressort entre le bras de levier 10 du crochet dont elle est solidaire, et une surface d'appui située vers l'axe 8 de rotation du crochet 7, tel qu'en particulier la surface du collier 3 portant ceux-ci.

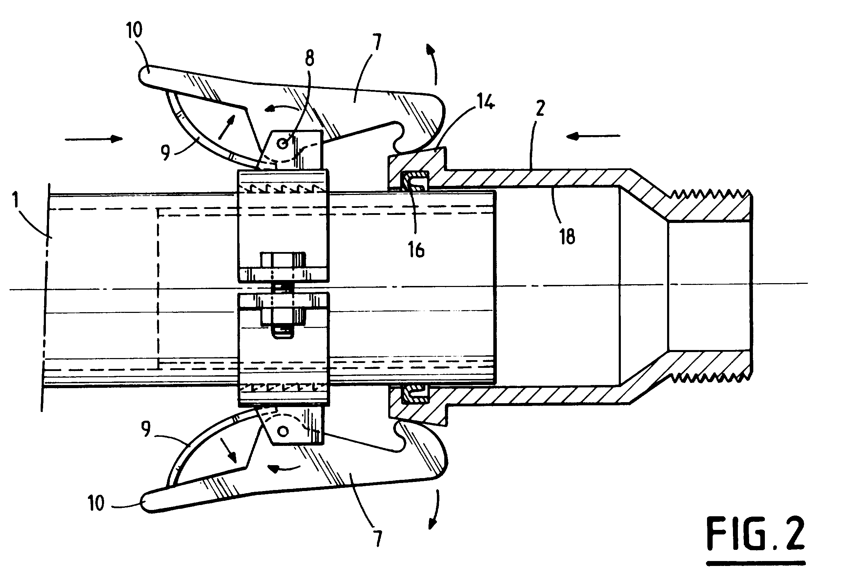

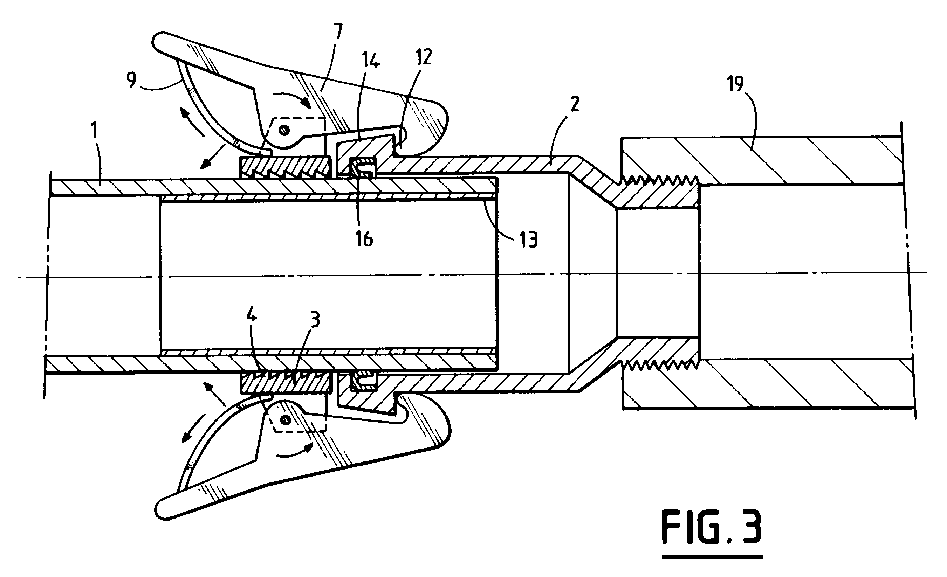

En effet, tel qu'on le remarque sur la figure 2, quand les crochets 7 sont basculés pour laisser passer la couronne 40 de la pièce femelle 2, l'extrémité des languettes 9 prenant appui sur la surface externe du collier 3 sont courbées par rapport à l'autre extrémité solidaire du bras de levier 10 du crochet 7, et cette contrainte de flexion permet, lors du relâchement desdits crochets, de fournir une force de rebasculement de ceux-ci qui assurent leur verrouillage derrière ladite couronne 14 tel que représenté sur la figure 3.

Ces mêmes bras de levier 10 permettent, après verrouillage, par pression sur leur extrémité, de comprimer lesdites languettes 9 et d'ouvrir le crochet pour déconnecter le dispositif.

Lors du verrouillage, une telle manoeuvre peut ne pas être nécessaire, car chaque crochet 7 dispose d'une forme avant arrondie dont la partie 11 située vers la surface extérieure de la tuyauterie 1 et au moins inclinée à partir du point 20 de contact avec l'extrémité de la couronne 14 quand elle vient s'y appuyer et d'une partie recourbée 12 qui s'appuie derrière ladite couronne 14 une fois clampée.

Pour accompagner l'ouverture des crochets, la surface extérieure de la couronne 14 contre laquelle glisse la partie 11 des crochets 7 peut être elle-même également inclinée et divergente vers la partie arrière de cette partie femelle 2, tel que le diamètre D1 de la partie avant soit le plus faible possible pour permettre de mieux se glisser sous la partie inclinée 11 des crochets et les soulever par basculement, et la partie arrière de la couronne suffisamment haute pour permettre le clampage des crochets.

Pour faciliter le basculement de ceux-ci, les points de contact 20 sont situés de préférence sur le diamètre D1 de la couronne 14, tel que ce diamètre D1 soit inférieur au diamètre sur lequel se situent les axes de basculement des crochets 7.

Ainsi, une faible force de rapprochement de la partie femelle 2 par rapport à la tuyauterie 1 permet le basculement des crochets sans action directe sur ceux-ci, et même avec un effort de ressort des languettes 9 important, pour assurer ensuite leur clampage et éviter tout risque d'ouverture intempestif.

La forme en couronne continue 14 de l'extrémité de la pièce mâle 2 évite d'avoir à orienter la tuyauterie 1 par rapport à celle-ci, puisque le clampage peut avoir lieu ainsi dans toute position relative en rotation des deux pièces l'une par rapport à l'autre, ce qui simplifie leur mise en oeuvre lors de la connexion.

Les dimensions des crochets 7 doivent être telles également que la distance entre la partie recourbée 12 de l'extrémité du crochet et le collier 3, ainsi que la distance entre le crochet lui-même et la surface de la tuyauterie 1, dégagent un espace 21 suffisant pour permettre à la couronne 14 de s'y loger avec un jeu évitant tout blocage et frottement inutiles, tel que représenté sur la figure 3.

Enfin, quand les tuyauteries 1 sont trop souples pour assurer un serrage et une tenue du collier 3, il peut être rajouté, à l'intérieur de la tuyauterie 1, un insert métallique 13, couvrant au moins la surface intérieure correspondant à l'emplacement du collier 3 et à la position du joint d'étanchéité 16 sur la surface externe une fois le clampage réalisé.

Ainsi, les seules pièces métalliques du dispositif, outre cet insert éventuel 13, sont la vis de serrage 5 de la bride 6, et les axes de basculement 8 des crochets 7, mais ces différentes pièces n'étant pas en contact les unes aux autres, ne risquent pas de s'oxyder mutuellement, et leurs dimensions sont suffisamment faibles pour ne pas perturber les équilibres thermiques.

Le reste des pièces constituant le dispositif suivant l'invention est en effet réalisé en matière plastique homogène renforcée, tel qu'en particulier et comme indiqué précédemment, pour les crochets 7, y compris les languettes de ressort 9, de la résine acétale et pour le collier 3 et la partie femelle 18, y compris la couronne 14, du matériau polyoléfine renforcé de fibres minérales, tel que du polypropylène chargé de fibres de verre. Le choix de tels matériaux est bien sûr essentiel pour assurer une résistance mécanique suffisante des différentes pièces du dispositif suivant l'invention tel que rappelé précédemment suivant les pressions et températures d'utilisation.

## Revendications

1. Dispositif de raccordement rapide de tuyauterie pour fluide sous pression comprenant une partie femelle (2) dans laquelle se loge l'extrémité de la tuyauterie (1) à raccorder, et portant un joint d'étanchéité (16), et comportant à son extrémité une couronne périphérique (14) continue, dont la forme coopère avec celle de crochet (7) porté par la tuyauterie (1) et qui peut venir se verrouiller dessus, en basculant autour d'un axe (8), par tout système (9) de rappel à ressort associé, caractérisé en ce qu'il comporte deux crochets (7), montés diamétralement opposés près de l'extrémité (1) de la tuyauterie à raccorder, sur un collier (3) comportant au moins une bride de serrage (6) autour de la tuyauterie (1) par toute fixation (5) réglable et des crampons intérieurs (4) qui s'ancrent dans la surface externe de la tuyauterie (1), lesquels crochets (7) et ladite couronne périphérique (14) étant entièrement en matière plastique homogène.

2. Dispositif de raccordement suivant la revendication 1, caractérisé en ce que chaque crochet (7) dispose d'une forme avant arrondie, dont la partie (11) située vers la surface extérieure de la tuyauterie (1) est au moins inclinée à partir du point (20) de contact avec l'extrémité de la couronne (14) quand elle vient s'appuyer contre lesdits crochets, afin de pouvoir les soulever et d'une partie recourbée (12) qui s'appuie derrière ladite couronne (14) une fois les crochets (7) basculés, par le système (9) de rappel à ressort.

3. Dispositif de raccordement suivant la revendication 2, caractérisé en ce que les points de contact (20) sont situés sur un diamètre D1 au plus égal au diamètre D2 de celui correspondant au positionnement des axes (8) de basculement des crochets (7).

4. Dispositif de raccordement suivant l'une quelconque des revendications 1 à 3, caractérisé en ce que lesdits crochets (7), ledit collier (3) et la pièce femelle (2) sont de couleur noire.

5. Dispositif de raccordement suivant l'une quelconque des revendications 1 à 4, caractérisé en ce que lesdits crochets (7) sont réalisés en résine acétale et la pièce femelle (2) et le collier (3) sont en polyoléfine chargé de fibres minérales de type polypropylène chargé de fibres de verre.

6. Dispositif de raccordement suivant l'une quelconque des revendications 1 à 5, caractérisé en ce que le joint (16) est un joint à lèvres situé dans une gorge (17) creusée dans la couronne (14) de la pièce femelle (2).

7. Dispositif de raccordement suivant l'une quelconque des revendications 1 à 6, caractérisé en ce qu'il comporte un insert métallique (13) glissé à l'intérieur de la tuyauterie (1) au niveau au moins du collier de serrage (3) et du joint (16).

## Patentansprüche

1. Schnellkupplungsvorrichtung für Rohre für Flüssigkeiten unter Druck, die einen weiblichen Teil (2), welches das Ende des zu verbindenen Rohres (1) aufnimmt, umfaßt und eine Dichtung (16) aufweist und an ihrem Ende einen durchlaufenden Außenring (14) trägt, dessen Form mit der des Hakens (7) auf dem Rohr (1) zusammenwirkt und der darüber verriegelt werden kann, indem er aufgrund eines Rückholsystems (9) mit Feder um die Achse (8) kippt, dadurch gekennzeichnet, daß sie zwei Haken (7) umfaßt, die diametral gegenüberliegend in der Nähe des Endes (1) des zu verbindenden Rohres auf einer Schelle (3) befestigt sind, die wenigstens eine Spannbrücke (6) um das Rohr (1) zur einstellbaren Fixierung (5) und innere Klammern (4) umfaßt, die sich in der externen Oberfläche des Rohrstücks (1) verankern, welche Haken (7) und welcher Außenring (14) vollständig aus homogenem Plastikmaterial bestehen.

2. Kupplungsvorrichtung nach Anspruch 1, dadurch gekennzeichnet, daß jeder Haken (7) über eine Form verfügt, die vorne abgerundet ist, deren Teil (11), der zur äußeren Oberfläche des Rohres (1) hin angeordnet ist, wenigstens von dem Kontaktpunkt (20) mit dem Ende des Ringes (14) an geneigt ist, wenn er gegen die besagten Haken drückt, um diese anheben zu können, und über einen gekrümmten Teil (12) verfügt, der von hinten gegen den besagten Ring (14) drückt, wenn einmal die Haken (7) durch das Rückholsystem (9) mit Feder gekippt worden sind.

3. Kupplungsvorrichtung nach Anspruch 2, dadurch gekennzeichnet, daß die Kontaktpunkte (20) sich auf einem Durchmesser (D1) befinden, der höchstens dem Durchmesser (D2) ist, der der Positionierung der Achsen (8) für die Kippung der Haken (7) entspricht.

4. Kupplungsvorrichtung nach einem der Ansprüche 1 bis 3, dadurch gekennzeichnet, daß die besagten Haken (7), die besagte Schelle (3) und das weibliche Stück (2) schwarz sind.

5. Kupplungsvorrichtung nach einem der Ansprüche 1 bis 4, dadurch gekennzeichnet, daß die besagten Haken (7) aus Acetalharz und das weibliche Stück (2) und der Kragen (3) aus Polyolefinen mit Mineralfasern in der Art wie Polypropylen mit Glasfasern bestehen.

6. Kupplungsvorrichtung nach einem der Ansprüche 1 bis 5, dadurch gekennzeichnet, daß die Dichtung (16) eine Dichtung mit Wülsten in einer Rille (17) ist, die in den Ring (14) des weiblichen Stückes (2) geschnitten wurde.

7. Kupplungsvorrichtung nach einem der Ansprüche 1 bis 6, dadurch gekennzeichnet, daß sie eine metallische Einlage (13) umfaßt, die in das Innere des Rohres (1) bis auf Höhe wenigstens der Klemmschelle (3) und der Dichtung (16) gesteckt wurde.

## Claims

1. A quick coupling device for pipework for fluid under pressure, the device comprising a female portion (2) in which the end of the pipework (1) to be coupled is received and carrying a sealing ring (16), and including at its end a continuous peripheral ring (14) of a shape that co-operates with that of a hook (7) carried by the pipework (1) and capable of latching thereon by tilting about an axis (8) by means of an associated spring return system (9), the device being characterized in that it includes two hooks (7) mounted diametrically opposite each other close to the end (1) of the pipework to be coupled, on a collar (3) including at least one flange (6) for clamping the collar around the pipework (1) by an adjustable fastening (5) and internal serrations (4) which engage in the outside surface of the pipework (1), which hooks and said peripheral ring (14) are made entirely of homogeneous plastics material.

2. A coupling device according to claim 1, characterized in that each hook (7) has a rounded front shape with the portion (11) thereof situated towards the outside surface of the pipework (1) being at least inclined running from the point of contact (20) with the end of the ring (14) when it presses against said hooks, thereby enabling them to be lifted, and also has a curved portion (12) which is engaged behind said ring (14) after the hooks (10) have tilted, by means of the spring return system (9).

3. A coupling device according to claim 2, characterized in that the contact points (20) are situated on a diameter D1 no greater than the diameter D2 corresponding to the positioning of the tilt axes (8) of the hooks (7).

4. A coupling device according to any one of claims 1 to 3, characterized in that said hooks (7), said collar (3), and the female portion (2) are all black in color.

5. A coupling device according to any one of claims 1 to 4, characterized in that said hooks (7) are made of acetal resin and the female portion (2) and the collar (3) are made of polyolefin reinforced with inorganic fibers, of the glass fiber reinforced polypropylene type.

6. A coupling device according to any one of claims 1 to 5, characterized in that the gasket (16) is a lip gasket situated in a groove (17) formed in the ring (14) of the female portion (2).

7. A coupling device according to any one of claims 1 to 6, characterized in that it includes a metal insert (13) slid into the pipework (1) at least in register with the clamping collar (3) and the gasket (16).
